# EUROPEAN PATENT APPLICATION

(11) **EP 4 625 963 A1**
(43) Date of publication of application: **01.10.2025**
(21) Application number: 24166073.7
(22) Date of filing: 25.03.2024
(51) Int. Cl.: H04N 1/60, H04N 1/62, H04N 9/64

(54) **IMAGE PROCESSING**

(71) Applicant: British Telecommunications public limited company, London E1 8EE (GB)
(72) Inventor: The designation of the inventor has not yet been filed
(74) Representative: British Telecommunications public limited company Intellectual Property Department

(57) **Abstract**

A computer implemented image processing method is described, which comprises identifying a degree of similarity between two or more hues as viewed by a colour vision deficient viewer, and determining two or more hues to be problem hues if the degree of similarity satisfies a similarity criterion. For one or more of the problem hues, the method defines an original colour group, the original colour group including the problem hue and related hues within a colour range of the problem hue. The method adjusts the hues of the original colour group(s) to generate a corresponding adjusted colour group. Then, when video images are received, the method replaces pixels within each video image having a hue corresponding to the original colour group(s) with the adjusted hue of the corresponding adjusted colour group(s). In this way, problem colours can be identified for a viewer with colour vision deficiency, and those particular colours (and variants thereof) can be adjusted to be more distinguishable for the colour deficient viewer, while leaving other colours unchanged to minimise the visual impact for other viewers.

## Description

The present disclosure relates to image processing. Embodiments of the present disclosure relate to an apparatus and a method for processing images to compensate for a colour vision deficiency.

### BACKGROUND

Roughly 8% of men and 0.4% of women are colour blind. There are different types of colour blindness (or Colour Vision Deficiency, CVD) and, while it is extremely rare for someone to be unable to see any colour at all, most colour blind people are unable to fully `see' red, green or blue light.

Colour Vision Deficiencies are usually split into the following types: Anomalous Trichromacy (all three cones in the eye are present, but one may be faulty), Protanomaly (reduced sensitivity to red light), Deuteranomaly (reduced sensitivity to green light), Tritanomaly (reduced sensitivity to blue light (this is extremely rare and usually ignored)), Dichromacy (the absence of a cone in the eye, with any colours varying only in the missing dimension (e.g. red) being confused), Protanopia (unable to perceive red light), Deuteranopia (unable to perceive green light) and Tritanopia (unable to perceive blue light).

Watching some television content, such as sport, can become difficult for colour blind viewers because colours worn by competing teams can be difficult to tell apart if the viewer has trouble distinguishing between greens and reds (for example).

Embodiments of the present invention seek to provide a method of modifying video content in a manner which provides better colour distinguishability for a colour blind user, whilst also leaving the image mostly unchanged to a trichromatic (full colour) viewer.

The examples described herein are not limited to examples which solve problems mentioned in this background section.

### SUMMARY

Various aspects and features of the invention are as set out in the accompanying independent and dependent claims.

According to an aspect of the invention, there is provided a computer implemented image processing method, comprising:
identifying a degree of similarity between two or more hues as viewed by a colour vision deficient viewer, and determining the two or more hues to be problem hues if the degree of similarity satisfies a similarity criterion;
for one or more of the problem hues, defining an original colour group, the original colour group including the problem hue and related hues within a colour range of the problem hue;
adjusting the hues of the original colour group(s) to generate a corresponding adjusted colour group;
receiving video images; and
replacing pixels within each video image having a hue corresponding to the original colour group(s) with the adjusted hue of the corresponding adjusted colour group(s).

In this way, problem colours can be identified for a viewer with colour vision deficiency, and those particular colours (and variants thereof) can be adjusted to be more distinguishable for the colour deficient viewer, while leaving other colours unchanged to minimise the visual impact for other viewers. Through this method, the hues of an adjusted colour group can be expected to be less similar to the hues of another (potentially also adjusted) colour group as viewed by a colour vision deficient viewer. The method may consider just a pair of similar (problem) hues, or three or more problem hues all of which could be confused with each other. The method seeks to remap some or all of the problem hues so that they are all visually distinct from each other from the perspective of the colour deficient viewer. The similarity criterion may be the satisfaction of a similarity threshold - for example that a colour distance between the plural hues is less than a threshold distance in a particular colour space, or that both (or all) of the possible problem hues fall within a defined region of colour space.

The method may comprise identifying a type of colour vision deficiency, wherein the similarity between the selected hues is identified in dependence on the identified type of colour vision deficiency. Furthermore, the adjustment of the colour groups may also take into account the identified type of colour vision deficiency. This makes it possible to tailor the image processing for viewers with different forms of colour vision deficiency. In some implementations the method comprises receiving a user selection of a particular type of colour vision deficiency as the identified type of colour vision deficiency. In other words, the user may select their type of colour vision deficiency, for example using a menu.

The method may comprise simulating a view including two or more hues, and identifying a similarity between two or more hues of interest within the simulated view. The simulation may involve mapping each of the original hues to a simulated hue based on a colour deficiency mapping. The colour deficiency mapping will be specific to the type of colour vision deficiency. A colour difference may then be determined between the one or more simulated hues (for example, a colour difference may be determined for each pair of hues within the plurality), and compared to a threshold colour difference (similarity threshold). If the colour difference in the simulated hues is less than the threshold colour difference, the pair of hues are determined to be problem hues.

In one implementation, simulating the view comprises rendering one or more still or video images which include the selected hues of interest. For example, if the method is intended to improve colour discrimination between coloured team strips (shorts/jerseys etc.) in a broadcast sports game, still images of each teams' strips could be rendered as a simulated view (with the hues of both strips being mapped based on colour deficiency type). Alternatively, past video footage of the two teams playing (and wearing those team strips) could be rendered. In these cases, the pair of hues represent a first hue being one of the colours of a first team's strip, and a second hue being one of the colours of a second team's strip.

Once problem hues have been identified, the colour group(s) are formed by identifying related hues of each original colour group based on a tolerance range around each problem hue.

Typically, the determination of the degree of similarity and the formation of the colour groups is carried out based on an HSV colour space, although another colour space such as RGB could be used instead. While the adjustments of the colour groups could also be carried out in HSV or RGB colour space, it is preferable to make such adjustment in a perceptually uniform colour space. As such, the method may comprise converting the hues of each original colour group from an original colour space into a perceptually uniform colour space, and modifying a position of one or more of the colour groups within the perceptually uniform colour space. The perceptually uniform colour space may be a L,U',V' colour space.

The modifying may comprise rotating a position of the colour group about a confusion point within the perceptually uniform colour space. The confusion point may be determined in dependence on the type of colour vision deficiency.

The angle of rotation may be subject to a user specified limit, which effectively constrains the strength of the adjustment, permitting the user to influence the balance between a stronger adjustment providing better colour discrimination (at the cost of a less natural viewing experience for viewers without colour vision deficiency) and a weaker adjustment.

The method may additionally comprise adjusting a relative brightness of two of the colour groups.

Once the colour groups have been adjusted, the method comprises converting the modified hues of each colour group from the perceptually uniform colour space back to the original colour space to form the adjusted colour groups.

Once all adjustments have been carried out, the method comprises generating a lookup table mapping hues from the original colour groups to corresponding hues of the adjusted colour groups, wherein the lookup table is used to replace the pixels in the video images as they are received for display.

According to another aspect of the invention, there is provided an image processing apparatus, comprising
an input configured to receive video images; and
a processor configured to
identify a degree of similarity between a pair of hues as viewed by a colour vision deficient viewer, and determine the pair of hues to be problem hues if the degree of similarity satisfies a similarity criterion;
for one or both of the problem hues, define an original colour group, the original colour group including the problem hue and related hues within a colour range of the problem hue;
adjust the hues of the original colour group(s) to generate a corresponding adjusted colour group; and
replace pixels within each received video image having a hue corresponding to the original colour group(s) with the adjusted hue of the corresponding adjusted colour group.

Also provided is a computer program, which when executed on a data processing apparatus causes the data processing apparatus to carry out a method according to the above.

Embodiments of the invention may be applied to the consumption of video content on digital media devices. In the case of sports for example, team jerseys can appear very similar to a colour deficient viewer making them hard to distinguish and the sport hard to follow accurately. The present technique identifies these problem colours (in this case the colour ranges of each team jersey form a colour group) and rotates the problem colours within a defined naturalness limit to make them be more spatially distinct in the colour space, causing the colour-blind viewer to have better colour distinguishability whilst also leaving the image mostly unchanged to the trichromatic (full colour) viewer.

It will also be apparent to anyone of ordinary skill in the art, that some of the preferred features indicated above as preferable in the context of one of the aspects of the disclosed technology indicated may replace one or more preferred features of other ones of the preferred aspects of the disclosed technology. Such apparent combinations are not explicitly listed above under each such possible additional aspect for the sake of conciseness.

Other examples will become apparent from the following detailed description, which, when taken in conjunction with the drawings, illustrate by way of example the principles of the disclosed technology.

### BRIEF DESCRIPTION OF THE DRAWINGS

FIG. 1 is a schematic diagram of an image processing apparatus for carrying out the present technique;
FIG. 2 is a schematic flow diagram of the overall method of adjusting video content for viewers with colour vision deficiency; and
FIG. 3 is a schematic flow diagram of the colour adjustment portion of the method of FIG. 2.

The accompanying drawings illustrate various examples. The skilled person will appreciate that the illustrated element boundaries (e.g., boxes, groups of boxes, or other shapes) in the drawings represent one example of the boundaries. It may be that in some examples, one element may be designed as multiple elements or that multiple elements may be designed as one element. Common reference numerals are used throughout the figures, where appropriate, to indicate similar features.

### DETAILED DESCRIPTION

The following description is made for the purpose of illustrating the general principles of the present technology and is not meant to limit the inventive concepts claimed herein. As will be apparent to anyone of ordinary skill in the art, one or more or all of the particular features described herein in the context of one embodiment are also present in some other embodiment(s) and/or can be used in combination with other described features in various possible combinations and permutations in some other embodiment(s).

A variety of techniques have been developed to adapt colours in an image in order to improve colour perception by a colour blind viewer, many of which are based on Daltonization. Daltonization aims to move colours which look identical to a person with colour vision deficiency in "opposite" directions in a colour space so that they are distinguishable. Content-independent Daltonization applies the same process to a given colour in an image, irrespective of the other colours present in the image. This can be quicker and less computationally intense, however often images will look unnatural and previously distinguishable colours can be made indistinguishable. Content-dependent Daltonization processes make use of the distribution of colour in the specific image being processed, using techniques such as colour histograms or clustering. These are more computationally intense but are generally better at not making previously clear differences invisible.

Daltonization processes typically make use of the CIELUV colour space, which covers the full range of human vision while also being perceptually uniform - i.e. colour differences spatially correspond to the expected colour change. Using this colour space, similar colours may be clustered and the relative spatial position of each cluster can be adjusted to ensure that different colours are as distinct from each other as possible while maintaining the naturalness of the image.

Applying Daltonization to a live video stream is likely to require optimisation given the need to process individual frames at a rate of (for example) 25 frames per second. Optimisation techniques might include computing look-up tables representing transformations within the CIELUV colour space which can be applied to multiple consecutive frames very quickly.

The traditional TV production process, in which a single version of a programme is delivered to every viewer, is evolving to enable programmes to be personalised through, for example, the selection of a different audio tracks or the ability to access supplementary information. Object-Based Media (OBM) is an umbrella term for the production, delivery and consumption of media experiences which are assembled from a variety of 'objects', thus allowing multiple versions of programmes to be easily created. This creates the opportunity for a particular Daltonization process to be applied to a TV programme and delivered to an individual or a specific group of viewers.

One existing technique is described in WO2015004437, and proposes an image processing method designed to make information that's difficult to see for colour-blind observers more accessible while retaining good fidelity for colour-normal and colour-blind observers. A key rationalisation for achieving good fidelity for both deuteranopes (CVD affecting medium-wave sensitivity) and protanopes (CVD affecting long-wave sensitivity loss) is that an RGB image optimised for deuteranopes involves most new variance occurring in the medium-wave and, compatibly, protanopes are sensitive to the medium-wave (with the same logic applicable to the long-wave in the case of image optimisation for protanopes). This is referred to as a cross optimisation. In WO2015004437, the technique is further combined to a joint optimisation whereby a new image, N is created with an unaltered short-wave response, long-wave altered per the anomalous protanope image, K and medium-wave per the anomalous deuteranope image, J. Fidelity of the final output (judged by closeness to the original image perceived by colour-normal whilst removing confusion for deuteranopes and protanopes both anomalous and pure) is improved by optimising the Daltonization that creates images K and J such that the magnitude of changes are minimised. However, this transform method is applied across a whole image - it does not propose limiting processing to areas for which confusion is substantive.

In "A Content-Dependent Naturalness-Preserving Daltonization Method for Dichromatic and Anomalous Trichromatic Color Vision Deficiencies", Journal of Imaging Science and Technology, Published January 2015, Milić, Hoffman, Tómács, Novaković, Milosavljević, a daltonisation method is proposed that (a) segments images based on chromaticity in order to define colour centres that are representative of each segment (using k-means clustering for the segmentation based on chromaticity values and ignoring lightness), (b) remaps colour centres in a direction perpendicular to the confusion line inside the corresponding admissible area, thus if the colour centres of two image segments lie on the same confusion line, they should be remapped perpendicular to the confusion line, and c) replaces original colour centres with new values and recalculates the colour values of other pixels in the segments. This content-dependant approach tries to maintain image naturalness by the restrictive nature of the remapping. While this can work quite well for still images, for video this method may cause significant glitching - specifically large shifts in colour remapping decisions - between frames for video.

In "A content-dependent Daltonization algorithm for colour vision deficiencies based on lightness and chroma information", IET Paper, Published 16 September 2020, Shen, Feng, Zhang, an improvement on the methods proposed in the Milic paper above are provided. Specifically, this method is another content-dependent Daltonisation algorithm but aims to solve the problem that if confusing colours are in the same cluster, the remapping will fail. The method seeks to achieve this by using both chroma and lightness information. The paper explains that this method is not suitable for video processing, because the processing result cannot be achieved in real time during the clustering step. Moreover, processing results are adjusted differently owing to the different clustering results; therefore, the image colour in the video time series is not continuous, that is, the colour of the pixels at the same position will be significantly different in different time frames.

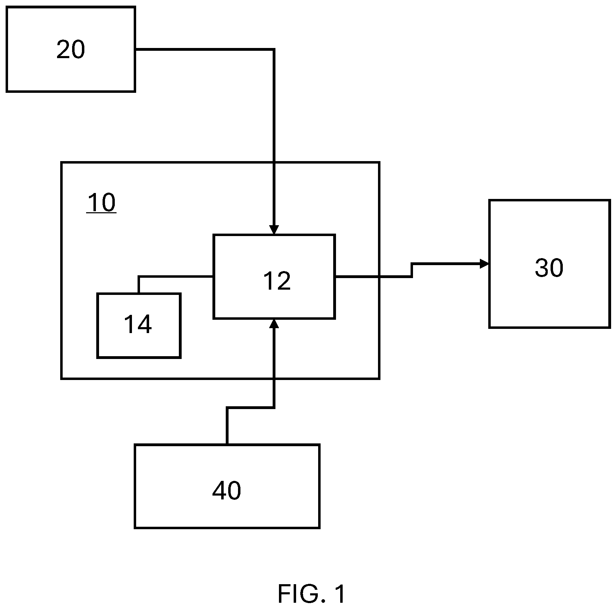

Referring to Figure 1, an example apparatus for implementing the present technique is shown. In Figure 1, a data processing apparatus 10 can be seen to comprise a processor 12 and a memory 14. The data processing apparatus 10 receives video data from a video server 20 (this may be received over the Internet for example), and is able to render this for display on a display 30. The data processing apparatus 10 may for example be a portable electronic device such as a smartphone or tablet device, a laptop or desktop computer, a television, or a set top box for connection to a television. A user interface 40 (which may for example include a keyboard and mouse, or a touch screen on the display 30, or a television remote control) is provided, via which a user / viewer is able to control the image processing method, as well as the apparatus 10 more generally. The processor 12 is responsible for adjusting the received video data to recolour it in a manner that makes certain colours more distinguishable from each other for a colour deficient viewer.

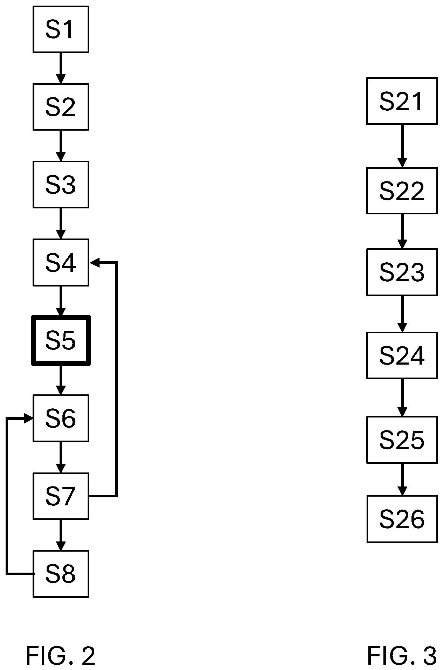

Referring to Figure 2, a method of image processing carried out by the apparatus of Figure 1 is shown. For exemplary purposes the present technique will be described with reference to the consumption of video content on digital media devices. In the case of sports for example, team jerseys can appear very similar to a colour deficient viewer making them hard to distinguish and the sport hard to follow accurately. The method described with reference to Figure 2 identifies these problem colours (in this case the colour ranges of each team jersey form a colour group) and rotates within a defined naturalness limit to make them to be more spatially distinct in the colour space, causing the colour-blind viewer to have better colour distinguishability whilst also leaving the image mostly unchanged to the trichromatic (full colour) viewer.

At a step S1 the user inputs their CVD (Colour Vision Deficiency) type via the user interface 40. The CVD type may be selectable via a menu which presents the user with a list of the available colour vision deficiency types. The selected CVD type feeds into certain stages of the technique, including the identification of problem hue-pairs, and the correction of problem hues. At a step S2, problematic colours (hues) are identified. In one example the colours that are likely to be problematic to the viewer are identified by simulating the CVD view of the prominent colours in the video (which may for example be received from the video server 20), with the simulation taking into account the user selected type of colour vision deficiency. In this way it is possible to see the image from the perspective of a colour deficient viewer. Algorithms for simulating colour vision deficiency views of input images are well known in the art. If the CVD simulated colours are too similar, they are seen to be problematic, and their hue data is extracted and added to a list of problem hues.

The similarity between a pair (or more) of colours could be determined in various ways. For example, the similarity between the colours may be determined to satisfy a similarity criterion if those colours are identified as falling within the same MacAdam ellipse in the CIE LUV space. A MacAdam ellipse represents regions of colour that trichromats perceive to be the same. The similarity could also be measured by distance in a colour space (RGB, HSV or LUV), or more simply a minimum distance of separation along the dichromat line in the LUV space can be defined, in either of which case the similarity criterion may be that the separation distance is less than a (predetermined) threshold value.

For most use cases, such as football, it is expected either that the probable problem colours are informed in advance (for example by indicating what the teams/colours are) or that the user is shown the candidate colours based on an analysis of the simulated image, and is able to select which groups are useful to them, with the selected groups being processed at the next stage.

For example, a team with red kit playing a team with green kit can have the team colours CVD simulated. If the CVD simulated colours are indistinguishable, or difficult to distinguish, they are set as problem hues to be corrected. One benefit of this process is that for repeated content such as sport or game shows, previous content - or even photos of team kits - can be used to identify prominent colours that will likely appear in subsequent video. This allows the processing to be done far ahead of the video's production in some cases.

After the problem hues are defined, at a step S3 the algorithm then creates colour groups of the defined problem hues and a tolerance range around each hue. A tolerance range is used (rather than just the problem hue alone) because an identified colour will vary in hue due to changes in scene conditions such as brightness, contrast, and saturation. The problem hues (including those within the tolerance range) are to be altered instead of the whole colour gamut of the video, leaving most colours unchanged. Through this the image naturalness is better maintained than other approaches because only a subset of the video is changed. The tolerance range defining the boundary of a colour group may be defined in any colour space, but HSV may be favoured for ease of selection. If so, this may require a transformation of the problem hues into HSV space if initially defined in RGB space for example. All three measurements, or axes, of such colour space may be used. In this case, colour groups may each represent a cube of HSV values. The determination may be purely empirical, defined by the user or an external agent until the group encapsulates the desired image contents. The "hues" (that is, as a single dimension in HSV colour space) are not necessarily adjusted exclusively with the present technique - during a colour shift saturation and value may also change.

At a step S4 the user inputs a correction strength (which will be applied as a correction angle as will be explained below).

At a step S5 the main correction algorithm is applied to the (original) colour groups defined at the step S3. The main correction algorithm is explained in detail with reference to Figure 3.

Turning to Figure 3, the individual steps represented by the step S5 of Figure 2 are shown. At a step S21, the colour groups identified at the step S3 are converted to the CIE Lu'v' space. At a step S22 colour centres are defined for each of the colour groups. The colour centres may be defined by calculating the average colour value of all hues within the colour group. The colour centres are therefore simply the centre of the defined colour groups.

At a step S23 the colour groups are rotated a specified number of degrees around a confusion (copunctal) point in LUV space by an amount dependent on (limited by) the correction strength selected at the step S4 of Figure 2. In some implementations an orthogonal translation may be used, which approximately corresponds to a rotation. In practice, the centre of a group is rotated, and then all members of that group have the same rotation applied at the end. The position of the confusion point in LUV colour space is a constant defined depending on the type of colour deficiency (as selected at the step S1 of Figure 1). The rotation occurs such that the Hues will be spaced as far apart from one another as possible in the CVD viewer's colour palette, within the limit of degrees of rotation set by the user at the step S4. By setting this limit (which may for example be 5 degrees for a moderate correction, or 10 degrees for a strong correction), it is possible to achieve image naturalness, because colours cannot deviate far from the original content. In the case of two colours, these are rotated away from one another, whereas in the case of 3 or more colours, the fringe (outer) colour groups within the LUV space may be rotated away from each other, and the inner groups are rotated as close to the midpoint angle of their two neighbouring groups as possible to maximise colour separation. In general terms, considering two or more colour groups corresponding to a problem set of hues, the hues of an adjusted colour group are less similar to the hues of the other adjusted colour group (or the original colour group if only one of the colour groups has been adjusted) as viewed by a colour vision deficient viewer.

At a step S24, the luminosity (brightness) of colour centres is optionally adjusted, preferably to adjust the relative brightness of two or more of the colour centres (to increase the differences between the respective colour groups). Adjusting the luminosity of one or both of a pair of problem colour groups increases the Euclidean distance between colour centres for the pair of colour groups in the CIE Lu'v' space, and as such increases colour contrast. The inclusion of this step can also raise the limit of different colours to adjust to above 5. Without this step there is only sufficient freedom in colour space to distance a smaller number of problem hues from each other sufficiently to provide a desired amount of colour distinction for the CVD viewer. Given the limited colour pallet in most video content, as well as the correction producing effective results without luminosity adjustment, this process is considered optional but desirable. The adjustment intensity (or limit) of this step may be user adjustable in the same way as for the rotation strength described above.

Optionally, during the colour group rotation step S23 an altered form of rotation as specified by Shen in the above-mentioned paper "A *content-dependent Daltonization algorithm for colour vision deficiencies based on lightness and chroma information"* is used, in which the rotation takes into account that the relation between angle rotation and colour shift is non-linear in strength due to the angle of the chromaticity gamut of a dichromatic viewer not being orthogonal to the confusion point. Using the angle adjustment proposed in Shen improves image naturalness and colour contrast as the adjustment is more uniform across the colour spectrum.

At a step S25, once the colour adjustment has been carried out in LUV colour space, the colour groups are converted to the sRGB colour space. Then, at a step S26 a lookup table is generated from the RGB adjusted colour groups, and is stored into the memory 14 of the image processing apparatus 10. The lookup table maps original hues to adjusted hues. In the lookup table, only hues belonging to the original colour groups (that is, problem hues and their variants within the inclusion range) are adjusted. All other colours are unchanged.

The process (corresponding to the step S5 of Figure 2) then ends, and the lookup table generated at the step S26 of Figure 3 is then applied to the sequence of video images received from the server 20 at a step S6, to generate an output image which is then displayed on the display 30.

At a step S7 the user is provided with a facility to indicate satisfaction or dissatisfaction with the correction strength in the output video image. In particular, the user may indicate that they are happy with the correction strength (or this may be the default case, requiring no user input) in which case the process advances to a step S8 in which the video advances to the next image frame (which will be processed by the lookup table at the step S6), or may indicate that they are not happy with the correction strength, in which case the process returns to the step S4, where a new correction strength is specified.

It is notable that the above-described process heavily reduces the processing required, because the algorithm only needs to `look' at the video colour content once to generate the lookup. After this the lookup table generated once can continue to be applied to subsequent image frames.

Though unlikely to occur in most cases, the algorithm has the possibility of remapping problem colours to the same colour of other non-problematic hues in a video image. In an implementation this is accounted for by gathering all likely colour data of the media to be corrected, and checking if unproblematic colours have been overlapped with remapped colours before creating the final look up table (that is, between the steps S25 and S26 of Figure 3). This would require an iterative approach, whereby the lightness modification and angle rotation are adjusted until no conflicts with unproblematic colours are found. However, this implementation would require a more processing heavy approach, and the iterative algorithm would cause it to be difficult to maintain the same colour remapping of the same team in different settings.

## Claims

1. A computer implemented image processing method, comprising:
identifying a degree of similarity between two or more hues as viewed by a colour vision deficient viewer, and determining the two or more hues to be problem hues if the degree of similarity satisfies a similarity criterion;
for one or more of the problem hues, defining an original colour group, the original colour group including the problem hue and related hues within a colour range of the problem hue;
adjusting the hues of the original colour group(s) to generate a corresponding adjusted colour group;
receiving video images; and
replacing pixels within each video image having a hue corresponding to the original colour group(s) with the adjusted hue of the corresponding adjusted colour group(s).

2. The image processing method of claim 1, comprising identifying a type of colour vision deficiency, wherein the similarity between the two or more hues is identified in dependence on the identified type of colour vision deficiency.

3. The image processing method of claim 2, comprising receiving a user selection of a particular type of colour vision deficiency as the identified type of colour vision deficiency.

4. The image processing method of claim 1 or claim 2, comprising simulating a view including the two or more hues, and identifying a similarity between the two or more hues within the simulated view.

5. The image processing method of claim 4, wherein the simulating a view comprises rendering one or more still or video images which include the two or more hues.

6. The image processing method of any preceding claim, comprising identifying the related hues of each original colour group based on a tolerance range around each problem hue.

7. The image processing method of any preceding claim, comprising converting the hues of each original colour group from an original colour space into a perceptually uniform colour space, and modifying a position of one or more of the colour groups within the perceptually uniform colour space.

8. The image processing method of claim 7, wherein the perceptually uniform colour space is a L,U',V' colour space.

9. The image processing method of claim 7 or claim 8, wherein the modifying comprises rotating a position of the colour group about a confusion point within the colour space.

10. The image processing method according to claim 9, wherein the confusion point is determined in dependence on the type of colour vision deficiency.

11. The image processing method according to claim 9 or 10, wherein the angle of rotation is subject to a user specified limit.

12. The image processing method according to any one of claims 9 to 11, comprising adjusting a relative brightness of two of the colour groups.

13. The image processing method according to any one of claims 7 to 12, comprising converting the modified hues of each colour group from the perceptually uniform colour space to the original colour space or a further colour space to form the adjusted colour groups.

14. The image processing method according to claim 13, comprising generating a lookup table mapping hues from the original colour groups to corresponding hues of the adjusted colour groups, wherein the lookup table is used to replace the pixels in the video images.

15. An image processing apparatus, comprising
an input configured to receive video images; and
a processor configured to
identify a degree of similarity between two or more hues as viewed by a colour vision deficient viewer, and determine the two or more hues to be problem hues if the degree of similarity satisfies a similarity criterion;
for one or more of the problem hues, define an original colour group, the original colour group including the problem hue and related hues within a colour range of the problem hue;
adjust the hues of the original colour group(s) to generate a corresponding adjusted colour group; and
replace pixels within each received video image having a hue corresponding to the original colour group(s) with the adjusted hue of the corresponding adjusted colour group.

16. A computer program, which when executed on a data processing apparatus causes the data processing apparatus to carry out a method according to any one of claims 1 to 13.
